# EUROPEAN PATENT SPECIFICATION

(11) **EP 4 363 145 B1**
(45) Date of publication and mention of the grant of the patent: **26.02.2025**
(21) Application number: 22737660.5
(22) Date of filing: 17.06.2022
(51) Int. Cl.: B23D 45/02, B28D 1/04, B28D 7/04, B23D 45/04

(54) **MACHINE AND PLANT FOR MACHINING SLABS**
MASCHINE UND ANLAGE ZUR BEARBEITUNG VON PLATTEN
MACHINE ET INSTALLATION POUR L'USINAGE DE DALLES

(30) Priority: 01.07.2021 IT 202100017381
(43) Date of publication of application: 08.05.2024
(73) Proprietor: Toncelli, Luca, 36061 Bassano del Grappa (Vicenza) (IT)
(72) Inventor: Toncelli, Luca, 36061 Bassano del Grappa (Vicenza) (IT)
(74) Representative: Dragotti & Associati S.R.L.
(86) International application number: PCT/IB2022/055631
(87) International publication number: WO 2023/275655

(56) References cited:
- WO-A1-2014/207723
- CN-A- 108 818 956
- IT-A1- 201900 015 566
- US-A- 6 131 557

## Description

The present invention relates to the technical sector involving the machining of slabs and relates to a machine for machining slabs, preferably for cutting slabs made of stone, stone-like, composite or ceramic material.

The invention also relates to a plant for machining slabs, comprising the aforementioned machine.

Below specific reference will be made to the cutting of slabs by way of example of a machining operation, without this being understood in a strictly limiting sense.

In the field relating to the machining of slabs made of stone, stone-like, ceramic or composite material, for some time cutting machines comprising a plurality of cutting spindles each having a disk-type tool for cutting slabs into quadrangular portions have been known.

With these machines it is possible to perform simultaneously a plurality of cuts on a slab along a predetermined direction of advancing movement of the cutting disks.

In particular, these machines generally comprise a horizontal surface or bench for supporting the slabs to be cut and at least two fixed support structures arranged laterally with respect to the support surface.

The support structures delimit a working area inside which the support surface is positioned. Moreover, in a particular embodiment of these machines, the support surface is rotatable about a vertical axis perpendicular to its upper surface in order to rotate the slabs.

In this way, following rotation, it is possible to perform a series of simultaneous cuts along a direction inclined at an angle and perpendicular to the direction of advancing movement of the cutting disks before rotation of the support surface.

The cutting machines are generally installed in plants which comprise, respectively upstream and downstream thereof, a station for loading the slabs onto the support surface and a station for unloading the cut slabs from the support surface.

In this connection the loading station and the unloading station may comprise, for example, rollerways or conveyor belts and means for picking up the slabs.

The known cutting machines furthermore comprise a movable beam slidably supported at its ends by the fixed support structures.

One or more spindles comprising cutting tools, preferably cutting disks, are slidably mounted on the movable beam.

In particular, each spindle comprises a carriage slidable along the axis of extension of the movable beam and a slide slidable along an axis which is vertical and therefore perpendicular to the support surface, towards and away from it.

The cutting disk is mounted at the bottom end of the sliding slide and may also be inclined with respect to a vertical plane in order to perform inclined cuts on the slabs.

These known cutting machines may also comprise manipulator means, preferably of the suction cup type, for picking up and displacing the slabs or portions of cut slabs, also known as "strips".

In a first embodiment, the suction cup manipulator means may be positioned on the movable beam which supports the spindles or on an auxiliary beam arranged alongside the movable beam.

In an alternative embodiment the manipulator means may comprise at least one suction cup for each spindle or for some of the spindles, preferably fixed to the respective carriage and movable along a vertical direction.

These cutting machines have a high degree of versatility and flexibility owing to the fact that they are able to position the plurality of spindles with the respective cutting tools independently along the movable beam and rotate the support surface after completion of the series of cuts.

These special features allow the known cutting machines to perform cuts on the slabs according to various patterns and profiles which may also vary from each other.

The provision of the manipulator means described above further increases the flexibility and the productivity of these cutting machines.

Examples of such cutting machines are known from the patent applications WO2014207723, MI2014A001993 and MI2015A000580.

WO2014207723 discloses a cutting machine comprising a main beam slidable along a pair of fixed lateral support structures and a secondary beam mounted slidably and rotatably with respect to the main beam; the cutting spindles are mounted slidably on the secondary beam. In particular, the secondary beam is mounted on a carriage so as to be rotatable about a vertical rotation axis perpendicular to the surface supporting the slabs and by means of a fifth wheel arranged between the secondary beam and the carriage. In turn, the carriage is mounted slidably on the main beam.

Said machine may also comprise suction cup devices mounted on the secondary beam for picking up the slabs or cut portions of the slabs.

One drawback of this solution consists in the fact that the structure of the machine is particularly complex, in particular because the power supply system for the drive of the fifth wheel must be displaceable together with rotation of the carriage and because at least two guide systems are provided for the sliding, respectively, of the main beam and the secondary beam.

This drawback results in a reduction in the overall slab cutting precision due to the complexity of the movements which must be performed in order to correctly position the cutting spindles.

A further drawback consists in the fact that the secondary beam, owing to the overall dimensions of the machine, generally has a limited length.

This drawback means that the distances between the cutting tools, i.e. their interaxial distance, are limited and may not be increased beyond a certain maximum value owing to the limited length of the secondary beam.

This drawback is particularly evident in the case where the interaxial distances of the cuts to be made on the slabs are greater than the maximum value indicated above.

Another drawback consists in the fact that the machine must be designed with larger dimensions in order to support the masses involved in the cutting operations, with a consequent increase in the costs and the overall dimensions.

MI204A001993 and MI2015A000580 disclose cutting machines also comprising a main beam slidable along the fixed support structures, a support equipment slidable along the main beam and an element for supporting a series of electric spindles on which the cutting tools are mounted.

The support element is mounted rotatably on the support equipment by means of a motorized fifth wheel.

The drawbacks of these latter two cutting machines are similar to those indicated above for the cutting machine of WO2014207723, with particular reference to the complexity of the structure of the machines and their larger size.

It is worth emphasizing that, among the machines for machining slabs, it is also known to employ water-jet cutting which allows curvilinear cuts to be performed.

The machines which employ water-jet cutting may have in combination a cutting disk and a water cutting nozzle which operate alternately or in succession.

A machine for machining slabs made of stone, stone-like, agglomerate or ceramic material according to the preamble of claim 1, and a plant according to the preamble of claim 14 are known from CN 108 818 956 A (D1).

The main object of the present invention is to provide a machine for machining slabs, in particular for cutting slabs, and a plant comprising said machine, which are able to overcome the aforementioned drawbacks.

A particular task of the present invention is to provide a machine of the aforementioned type which has a simplified structure compared to the similar machines known in the field.

A further task of the present invention is to provide a machine of the type indicated above which is able to perform a wide variety of cutting patterns on the slabs, while maintaining a high degree of cutting precision.

Another task of the present invention is to provide a machine of the aforementioned type which is able to simplify the movements of the various components for correct positioning of the spindles and the machining tools.

A further task of the present invention is to provide a machine of the aforementioned type which does not have to be provided with larger dimensions in order to support the masses of the components which operate during the machining operations.

Another task of the present invention is to provide a machine of the aforementioned type which has a simplified kinematic chain for the movements of the machining tools.

The object and the main tasks described above are achieved with a machine for machining slabs according to claim 1 and a plant for machining slabs according to claim 14.

In order to illustrate more clearly the innovative principles of the present invention and its advantages compared to the prior art, an example of embodiment of a machine and a plant for machining slabs will be described below with the aid of the accompanying drawings. In particular, in the figures:
- Figure 1 shows a perspective view of the plant for machining slabs, comprising the machine according to the present invention in a first embodiment;
- Figure 2 shows a front view of the plant for machining slabs according to Figure 1;
- Figures 3 and 4 show, respectively, a perspective and front view of the machine for machining slabs in a first configuration and in a first operating position;
- Figure 5 shows a front view of the machine according to Figures 3 and 4 in a second operating position;
- Figure 6 shows a side view of the machine for machining slabs according to the present invention along a transverse centre plane;
- Figure 7 shows a perspective view of the machine for machining slabs in a second configuration;
- Figures 8 and 9 show perspective views of the machine in the second configuration in two different operating positions;
- Figure 10 shows a side view of the machine in the operating position of Figure 9;
- Figures 11-13 show, respectively, a front view and two side views of the machine in the second configuration indicated above and in various operating positions;
- Figure 14 shows a front view of a detail of the machine for machining slabs in an alternative embodiment;
- Figures 15 and 16 show, respectively, a perspective view and a front view of the plant for machining the slabs comprising a machine in accordance with a second alternative embodiment.

The present description, provided only for illustrative purposes and not limiting the scope of the invention, refers to a machine and to a plant for machining slabs.

In particular, the machine and the plant according to the present invention are particularly suitable for cutting slabs by means of suitable cutting tools, preferably cutting disks, mounted on respective spindles.

In this respect the machine according to the present invention may also be called a multiple-spindle cutting machine.

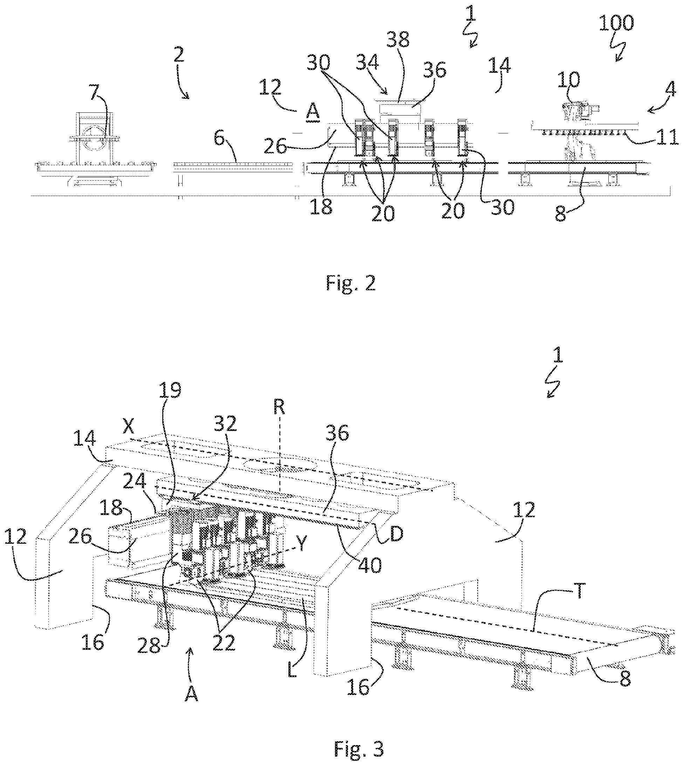

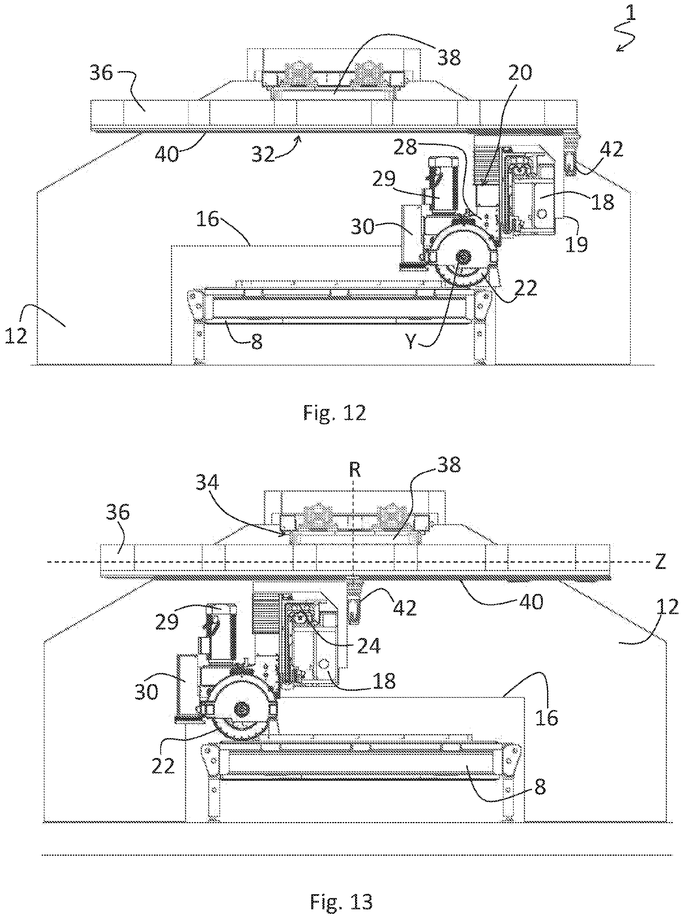

With particular reference to the figures, the machine for machining slabs is shown separately in Figures 3-14 and is indicated overall by the reference number 1.

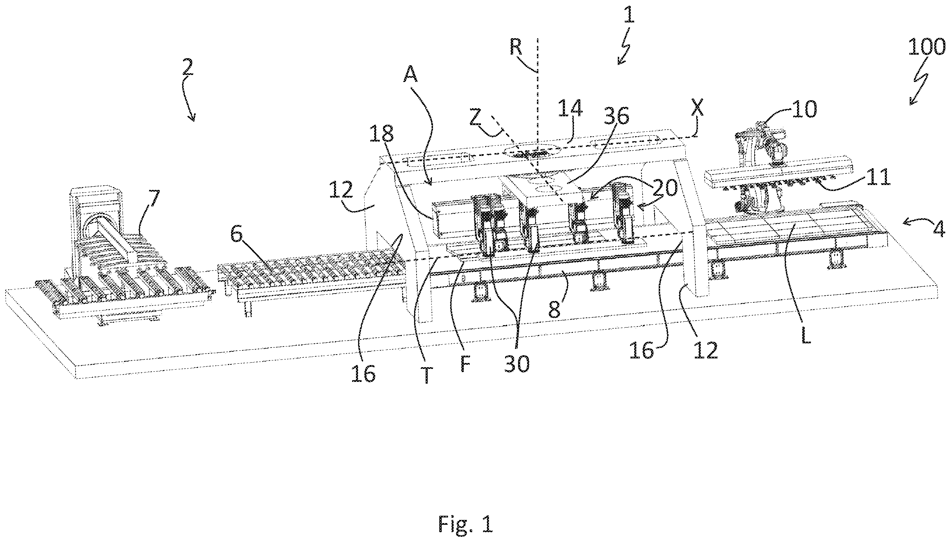

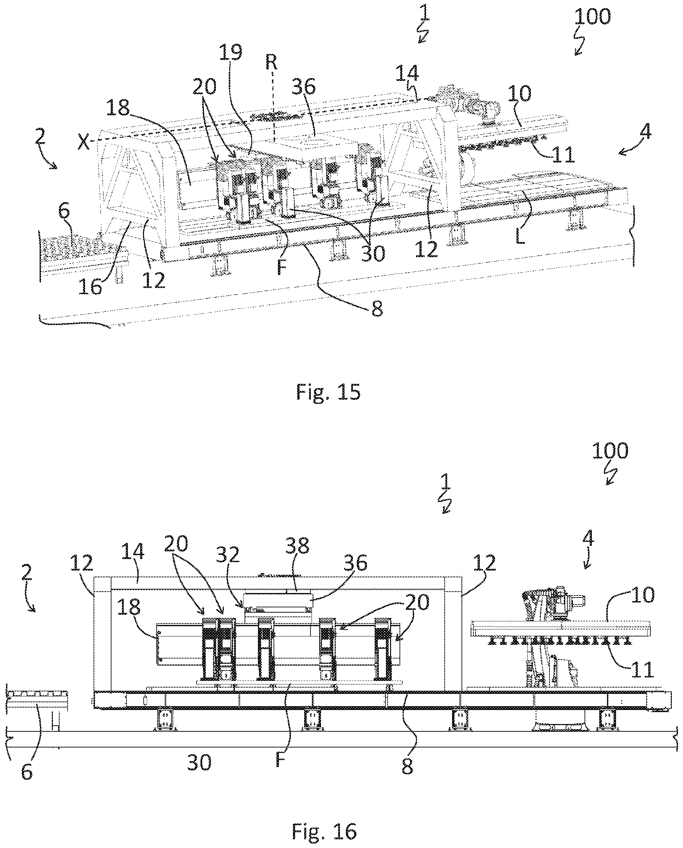

The plant for machining slabs L is denoted overall by the reference number 100; the plant 100 comprising the machine 1 in a first embodiment is shown in Figures 1 and 2; the plant 100 comprising the machine 1 in a second embodiment is shown in Figures 15 and 16.

As shown in Figures 1-2 and 15-16, the plant 100 comprises, in addition to the machine 1 for machining the slabs, also a station 2 for loading the slabs L to be machined/cut, which is positioned upstream of the machine 1, and a station 4 for unloading the machined/cut slabs L, positioned downstream of the machine 1.

Suitably, the loading station 2 comprises a rollerway 6; the slabs L to be machined/cut are loaded onto the rollerway 6 so as to be then transferred to the machine 1.

The loading of the slabs L to be machined/cut onto the rollerway 6 may be performed by means of a suction cup pick-up device 7, of the type shown in Figures 1 and 2.

The rollerway 6 may also be replaced with equivalent devices designed to transport the slabs L towards the machine 1.

The station 4 for unloading the machined/cut slabs L comprises preferably an extension of the support surface 8 for the slabs L forming part of the machine 1 and a robotic arm 10 with suction cups 11 for picking up the portions or strips F of cut slabs L positioned on the support surface 8 and exiting the machine 1.

The robotic arm 10 of the unloading station 4 may also be replaced by an equivalent device for picking up the cut slab portions.

Optionally, the plant 100 may comprise a series of machines 1 according to the present invention arranged in line downstream or upstream of the other machines 1. This embodiment is not shown in the attached figures.

The machine 1 for machining slabs L comprises preferably:
- a pair of fixed support structures 12 intended to delimit a working area A;
- a horizontal surface 8 for supporting the slabs L being machined and positioned within the working area A, already described above with reference to the plant 100;
- a fixed horizontal beam 14 supported by the fixed support structures 12.

The fixed horizontal beam 14 extends along a longitudinal axis X which lies in a horizontal plane substantially parallel to the support surface 8 and to the ground, as shown more clearly in Figures 1, 3, 5 and 7.

Preferably, the fixed support structures 12 are secured to the ground; alternatively, the fixed support structures 12 may be stably secured to the other components of the machine, in particular to the support surface 8.

In particular, the first embodiment of the machine 1 which comprises the fixed support structures 12 secured to the ground is shown in Figures 1 and 2 (relating to the plant 100) and

Figures 3 to 14; the second embodiment of the machine 1 which comprises the support structures 12 secured to the support surface 8 is shown in Figures 15 and 16 relating to the plant 100.

Preferably, the support surface 8 is formed by a conveyor belt for the advancing movement of the slabs L along a longitudinal direction T.

Furthermore, the conveyor belt comprises an elastomeric upper surface suitable for absorbing the cuts made by the cutting disks; the supporting surface of the belt 8 is parallel to the ground.

Said conveyor belt is not rotatable about a respective vertical axis perpendicular to the ground for varying the direction of advancing movement of the slabs.

Moreover, the fixed support structures 12 extend preferably along a direction transverse to the longitudinal axis X of the fixed beam 14; each of the support structures 12 has an opening 16 for the passage of the support surface 8, or the conveyor belt, as shown more clearly in Figures 1 and 15 and for the passage of the slabs L entering and exiting the working area A. The openings 16 of the support structures 12 allow the slabs L to be fed from the rollerway 6 of the loading station 2 to the support surface 8 of the machine 1 and the cut slabs L to be transferred from the working area A to the unloading station 4.

Advantageously, the fixed support structures 12 are spaced from each other at a predetermined distance corresponding to the extension of the working area A and the fixed beam 14 is supported by the fixed support structures 12 at its ends.

In an alternative embodiment not shown in the Figures, it is also possible for one of the fixed support structures 12 to be arranged in the front area and the other one to be arranged in the rear area of the machine 1.

Moreover, the machine 1 for machining the slabs L comprises a horizontal beam 18 which is movable with respect to the fixed beam 14. The movable beam 18 comprises at least one spindle 20 slidably mounted on the movable horizontal beam 18 and designed to have at least one machining tool 22 mounted thereon.

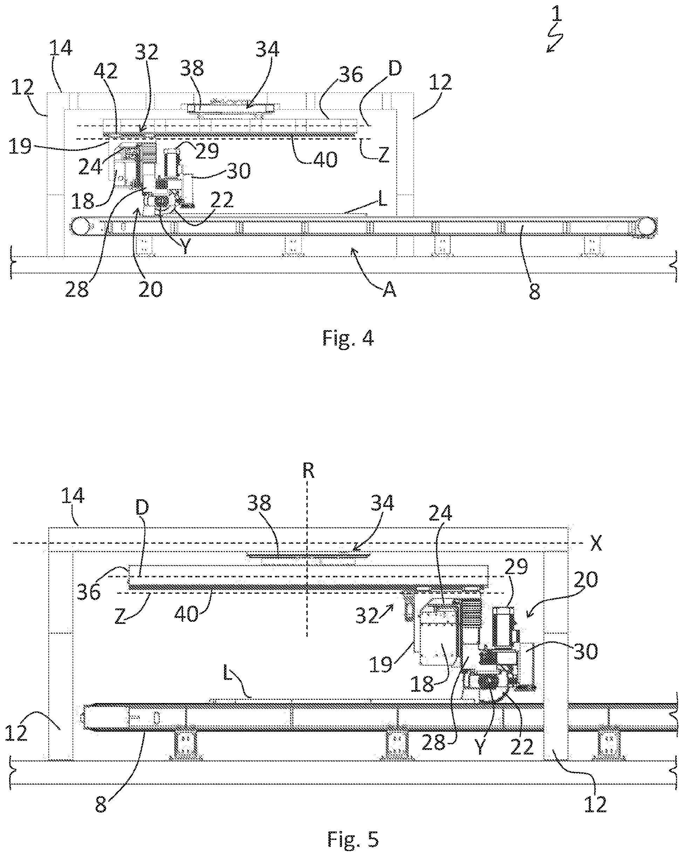

As already mentioned, the machining tool 22 is a cutting disk, as shown more clearly in Figures 4-14.

Preferably, the machine 1 for machining the slabs L comprises a plurality of spindles 20 slidably mounted on the movable horizontal beam 18 so as to be able to be selectively positioned along the same and designed to have respective machining tools 22 mounted thereon.

In the embodiments of the plant 100 and the machine 1 shown in the figures, five spindles 20 slidable along the movable beam 18 are provided.

However, the number of spindles 20 may also be different depending on the type of machining to be performed, without thereby departing from the scope of protection of the present invention.

As shown in particular in Figures 3-6, each spindle 20 comprises:
- a carriage 24 mounted slidably on a movable beam 18 by means of guiding means 26; said carriage 24 may also be provided with a braking device, not shown in the attached figures, for locking the carriage 24 in the machining position along the movable horizontal beam 18;
- a slide 28 able to be moved along a vertical direction perpendicular to the horizontal support surface 8;
- a respective machining tool 22, preferably a cutting disk, mounted on the motorized shaft having an axis horizontal or inclined with respect to the support surface 8 at the bottom end of the slide 28.

Each carriage 24 is provided with its own drive 29 and own transmission system, not shown in the attached figures, so as to allow independent sliding of each spindle 20 along the movable horizontal beam 18.

The transmission mechanism may be of the type known per se, for example of the rack-and-pinion motor type or may comprise linear motors.

The movement of the slide 28 along the vertical direction is performed preferably by means of pneumatic cylinders or by means of a worm screw and nut mechanism. These means for moving the slide 28, which are well-known to the person skilled on the art, are not shown in the attached drawings.

As shown more clearly in Figures 3-6, the machining tools 22, namely the cutting tools mounted on the spindles 20, in particular on the motorized shafts, have a rotation axis Y preferably parallel to an axis of extension of the movable beam 18, namely an axis substantially horizontal and parallel to the ground.

In accordance with this configuration, it is possible to perform a plurality of simultaneous cuts on the slab L being machined using the cutting disks 22, by means of the movement and sliding of the movable horizontal beam 18 along a predetermined direction of advancing movement Z, as described in the continuation below of the present description. The formation of a plurality of simultaneous cuts on the slab L allows a plurality of cut portions or strips F to be obtained.

Optionally, at least one of the machining tools 22, namely the cutting disks, may be inclined with respect to the vertical so as to have the rotation axis Y inclinable with respect to the axis of extension of the movable horizontal beam 18.

In accordance with a further embodiment, not shown in the attached figures, at least one spindle 20 may be rotatable about a substantially vertical rotation axis.

Advantageously, at least one spindle 20 is provided with a suction cup manipulator device 30 for picking up and displacing the slabs L or the strips F on the support surface 8 after cutting of the slabs L.

In the attached figures, the suction cup manipulator devices 30 are mounted on three spindles 20; however, the number of manipulator devices 30 may also be different without thereby departing from the scope of protection of the present invention.

Each suction cup manipulator device 30 is movable with respect to the corresponding spindle 20 along a respective vertical direction, preferably by means of a pneumatic cylinder, not shown in the attached figures and of the type known per se.

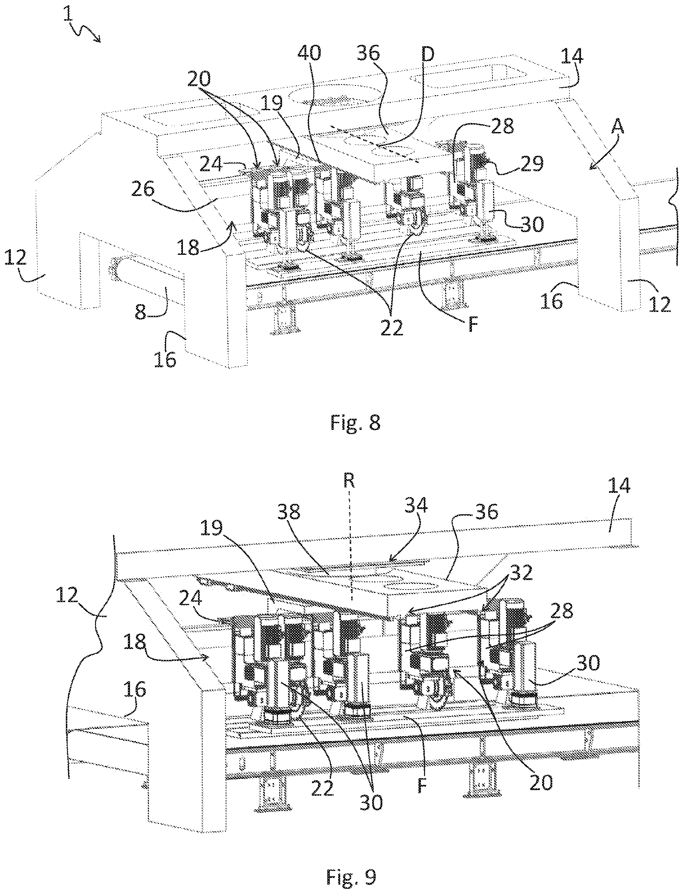

Operation of the suction cup manipulator devices 30 is illustrated in Figures 8, 9 and 10.

In accordance with an alternative embodiment of the invention, not shown in the attached figures, the machine 1 for machining the slabs may comprise at least one manipulator device mounted on the movable horizontal beam 18.

The machine 1 for machining the slabs L may also comprise means for adjusting the inclination of at least one spindle 20 with respect to a vertical plane, able to incline the machining tool 22, i.e. the cutting disk, with respect to the vertical, as indicated above.

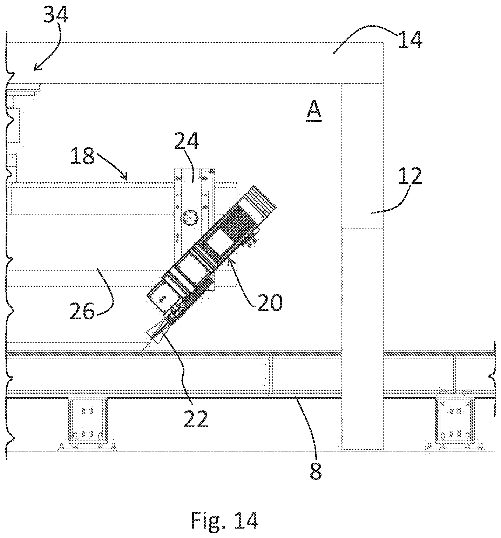

Figure 14 shows a spindle 20 which is inclined with respect to the vertical plane, said configuration allowing inclined cuts to be made in the slabs L. The means for adjusting the inclination of the spindles 20 are not visible in the attached drawings.

The machine 1 for machining slabs L also comprises:
- means 32 for moving the movable horizontal beam 18 with respect to the fixed horizontal beam 14 along the predetermined direction of advancing movement Z lying in a plane parallel to the support surface 8;
- means 34 for rotating the movable horizontal beam 18 with respect to the fixed horizontal beam 14 about a rotation axis R arranged vertically, namely perpendicular to the direction of advancing movement Z.

The plane in which the direction of advancing movement Z lies is parallel to and lower than the plane in which the longitudinal axis X of the fixed horizontal beam 14 lies.

Advantageously, the rotation axis R is fixed; in particular the rotation axis R is fixed with respect to the direction of advancing movement Z. The term "fixed" relating to the rotation axis R is intended to indicate that there is no displacement of the rotation axis R during the machining of the slabs L, in particular with respect to the direction of advancing movement Z.

The rotation axis R of the movable horizontal beam 18, in addition to being fixed, is located preferably in a central position with respect to the fixed beam 14.

These special arrangements enable the power supply systems for the various drives of the machine, not shown in the attached figures, to be arranged in such a way as to simplify the overall structure of the machine 1, as explained further below.

Moreover, these special arrangements are such that it is possible to perform more rapidly the various operations for positioning the spindles 20 along the movable horizontal beam 18 and with respect to the slab to be machined.

As shown in the attached figures, the machine 1 for machining the slabs 1 comprises an interconnecting intermediate element 36 arranged between the fixed horizontal beam 14 and the movable horizontal beam 18 and coupled to both the beams.

In particular, the intermediate element 36 shown in the figures is located preferably in the middle and in a central position with respect to the fixed beam 14 and may have an elongated form.

However, the intermediate element 36 may also be located in different positions of the fixed beam 14 in accordance with alternative embodiments not shown in the figures, without thereby departing from the scope of protection of the present invention.

Advantageously, the intermediate element 36 is rotatably coupled to the fixed horizontal beam 14 and the movable horizontal beam 18 is slidably mounted on the intermediate element 36. The means 34 for rotation of the movable horizontal beam 18 with respect to the fixed horizontal beam 14 about the rotation axis R comprise for example a motorized fifth wheel 38.

In particular, the motorized fifth wheel 38 is able to form the rotatable coupling between the fixed beam 14 and the intermediate element 36, as shown more clearly in Figures 2, 4, 5, 6 and 10-13.

The fifth wheel 38 is rotatable about the rotation axis R indicated above so as to position the intermediate element 36 along a direction parallel (see for example Figures 3-5) or transverse (see for example Figures 1, 2 and 7-9) or inclined at an angle with respect to the longitudinal axis X of the fixed beam 14.

In particular, the fifth wheel 38 allows the rotation of the intermediate element 36 within an angle preferably of between 0° and 90°.

In the transverse position the intermediate element 36 projects laterally on opposite sides of the fixed beam 14.

Moreover, the movable beam 18 is slidably mounted on the intermediate element 36 with a fixed orientation with respect to the said intermediate element 36, namely with a transverse orientation with respect to the axis of extension D of the intermediate element 36.

The rotation of the intermediate element 36 causes the rotation of the movable beam 18 about the rotation axis R and therefore with respect to the fixed beam 14.

In this way, the rotation axes Y of the cutting disks 22 may be positioned in a direction parallel or transverse with respect to the longitudinal axis X of the fixed beam 14.

Advantageously, the intermediate element 36 with the movable beam 18 may also be rotated with respect to the fixed beam 14 so that the axes Y of rotation of the cutting disks 22 are angled with respect to the longitudinal axis X of the fixed beam 14, namely so that they are in an intermediate position between the direction parallel to the axis X and the direction transverse to the axis X.

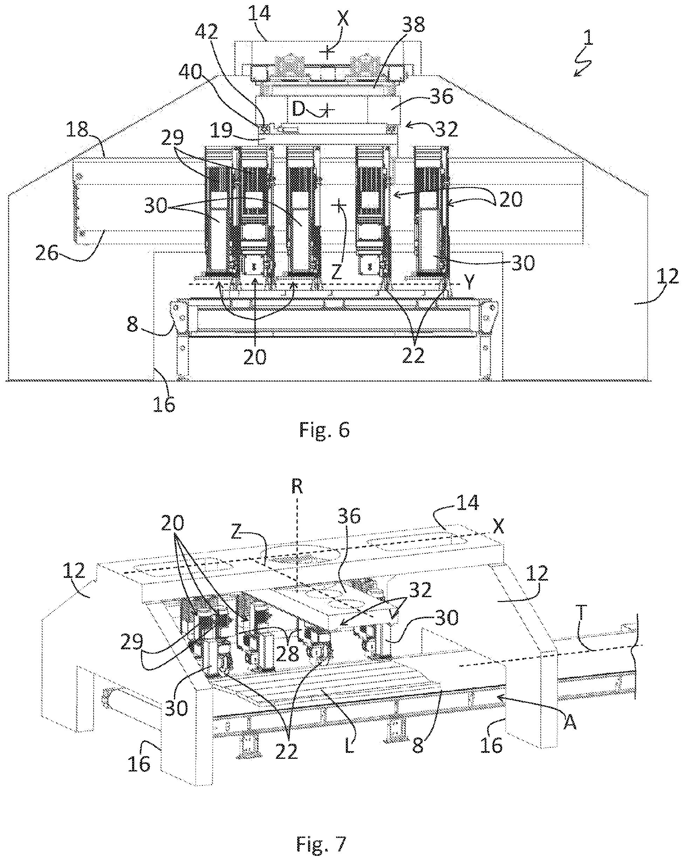

With reference to the sliding mounting of the movable beam 18 on the intermediate element 36, the movement and sliding means 32 may comprise at least one pair of guides 40 and a series of shoes 42 slidably mounted on the guides 40, of the type shown in Figure 6.

These movement and sliding means 32 may also comprise drives for the sliding movement of the movable beam 18 along the intermediate element 36.

The guides 40 are mounted on the intermediate element 36 and the shoes 42 are coupled to the movable horizontal beam 18. In particular, the shoes 42 are mounted on a bracket 19 integral with the movable horizontal beam 18.

This special arrangement is such that the movable horizontal beam 18 is slidable with respect to the intermediate element 36 and therefore with respect to the fixed beam 14 along the direction of advancing movement Z as described above.

As can be noted, the machine 1 according to the present invention has a single guide system between the fixed horizontal beam 14, the intermediate element 36 and the movable horizontal beam 18; this special arrangement helps further simplify the structure of the machine 1.

Preferably, a programmable computerized system for managing and controlling the machine 1 is provided.

Operatively speaking, the program for machining of the slabs L first performs a first series of cuts by means of the advancing movement of the movable horizontal beam 18 along the intermediate element 36, the axis of extension D of the latter being kept parallel to the longitudinal axis X of the fixed beam 14 during this step.

This step is shown in the detail of Figures 3-6 and the cuts of the first series are defined as being longitudinal in the context of the present description.

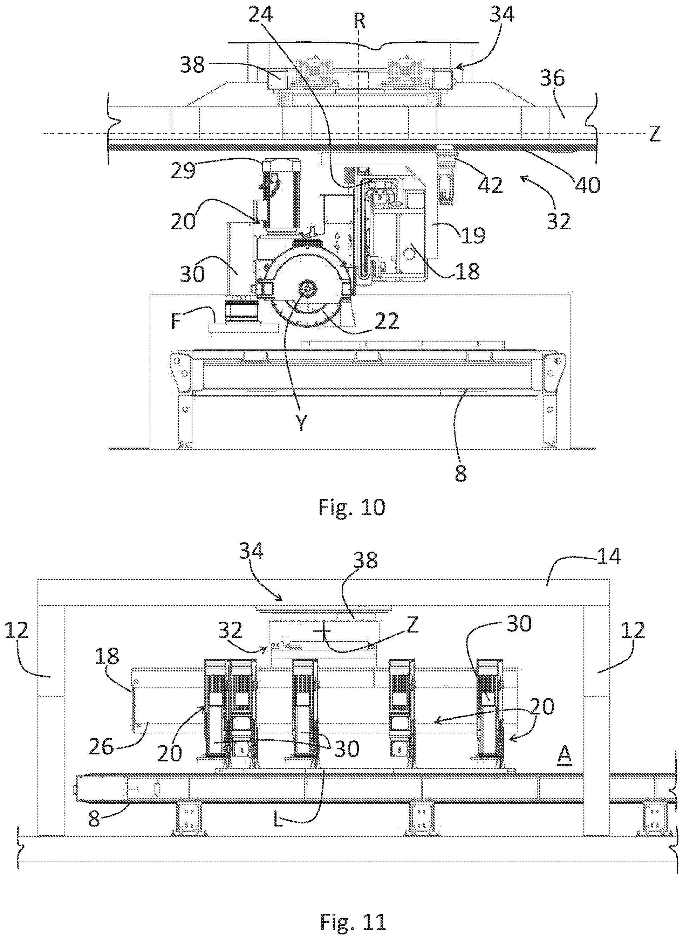

Then, after the intermediate element 36 has been rotated through 90° by means of the fifth wheel 38 about the rotation axis R so as to bring it into the position transverse with respect to the longitudinal axis X of the fixed beam 14, the machining program performs a second series of cuts on the slab L, defined transverse in the context of the present description, by means of the advancing movement of the movable beam 18 along the intermediate element 36, as shown more clearly in Figures 11 to 13.

In both the aforementioned steps the movement of the movable horizontal beam 18 is performed by means of the movement means 32 along the direction of advancing movement Z.

Obviously, the execution of the longitudinal and transverse cuts on the slabs L may be also reversed with respect to the order indicated above, without thereby departing from the scope of protection of the present invention.

Between the steps for carrying out the longitudinal cuts and the transverse cuts on the slabs L a step of picking up and moving the cut strips F by means of the manipulator devices 30 described above may be provided.

As already mentioned, the intermediate element 36 may also be rotated with respect to the fixed beam 14 so that the rotation axes Y of the machining tools 22 are angled with respect to the longitudinal axis X of the fixed horizontal beam 14, namely occupy intermediate positions between the position parallel to the longitudinal axis X and the position perpendicular to the longitudinal axis X.

From the above description it is now clear how the machine and the plant for machining slabs according to the present invention are able to achieve advantageously the predefined objects. In particular, by keeping fixed the rotation axis R of the rotatable coupling of the intermediate element 36 with the fixed horizontal beam 14, it is possible to simplify the overall structure and the movements of the machine 1.

Moreover, the machine 1 for machining the slabs according to the present description is able to maintain a high degree of flexibility and high level of productivity, even greater than the productivity of the machines known in the sector.

Moreover, the extension of the conveyor belt beyond the working area allows the cut slab portions, namely the quadrangular sub-elements, to be brought into a well-defined position with respect to the robotic arm for stable and simplified gripping thereof.

Obviously, the above description of embodiments applying the principles of the present invention is provided by way of example only, and any modifications within the scope of the invention as defined by the claims can be encompassed.

## Claims

1. Machine (1) for machining slabs (L) made of stone, stone-like, agglomerate or ceramic material, comprising:
- a pair of fixed support structures (12) designed to delimit a working area (A);
- a horizontal surface (8) for supporting the slabs (L) during machining thereof, positioned in said working area (A);
- a fixed horizontal beam (14) supported by said fixed support structures (12);
- a horizontal beam (18) movable with respect to the fixed horizontal beam (14) and comprising at least one spindle (20) which is slidably mounted on said movable horizontal beam (18) and designed to have at least one machining tool (22) mounted thereon;
- movement means (32) for moving said movable horizontal beam (18) with respect to said fixed horizontal beam (14) along a predetermined direction of advancing movement (Z) lying in a plane which is parallel to the support surface (8); **characterized by**
- rotation means (34) for rotating said movable horizontal beam (18) with respect to said fixed horizontal beam (14) about a rotation axis (R) which is arranged vertically;
wherein said rotation axis (R) is fixed.

2. Machine (1) according to claim 1, **characterized in that** it comprises an interconnecting intermediate element (36) arranged between said fixed horizontal beam (14) and said movable horizontal beam (18) and coupled both to said fixed horizontal beam (14) and to said movable horizontal beam (18).

3. Machine (1) according to the preceding claim, **characterized in that** said intermediate element (36) is coupled to said fixed horizontal beam (14) rotatably about the rotation axis (R).

4. Machine (1) according to the preceding claim, **characterized in that** said rotation means (34) comprise a motorized fifth wheel (38) for the rotatable coupling between said fixed horizontal beam (14) and said intermediate element (36).

5. Machine (1) according to any one of the claims 2-4, **characterized in that** said movable horizontal beam (18) is slidably mounted on said intermediate element (36).

6. Machine (1) according to the preceding claim, **characterized in that** said movement means (32) comprise at least one pair of guides (40) and a series of shoes (42) slidably mounted on said guides (40), said guides (40) being mounted on said intermediate element (36) and said shoes (42) being coupled to the movable horizontal beam (18) for the slidable mounting of the movable horizontal beam (18) on said intermediate element (36).

7. Machine (1) according to any one of the preceding claims, **characterized in that** it comprises a plurality of spindles (20) slidably mounted on said movable horizontal beam (18), at least one of said spindles (20) being provided with a suction cup manipulator device (30).

8. Machine (1) according to any one of the claims 1 to 6, **characterized in that** it comprises at least one suction cup manipulator device mounted on said movable horizontal beam (18).

9. Machine (1) according to any one of the preceding claims, **characterized in that** it comprises a plurality of spindles (20) slidably mounted on said movable horizontal beam (18), there being provided means for adjusting the inclination of at least one of said spindles (20) with respect to a vertical plane.

10. Machine (1) according to any one of the preceding claims, **characterized in that** the machining tools (22) have a rotation axis (Y) which is substantially horizontal and parallel to the axis of extension of said movable horizontal beam (18).

11. Machine (1) according to any one of the preceding claims, **characterized in that** at least one of the machining tools (22) has the respective rotation axis (Y) inclinable relative to the axis of extension of the movable horizontal beam (18).

12. Machine (1) according to any one of the claims 1-9, **characterized in that** at least one spindle (20) is rotatable about an axis which is substantially parallel to said rotation axis (R).

13. Machine (1) according to any one of the preceding claims, **characterized in that** said rotation axis (R) is perpendicular and fixed with respect to said direction of advancing movement (Z).

14. Plant (100) for machining slabs (L) comprising:
- a loading station (2) for loading the slabs (L) to be machined;
- a machine (1) for machining the slabs (L);
- an unloading station (4) for unloading the machined slabs (L);
**characterized in that** said machine (1) for machining the slabs (L) is a machine of the type according to any one of the claims 1-13.

15. Plant (100) according to the preceding claim, **characterized in that** it comprises a series of machining machines (1) according to any one of the claims 1-13 arranged in line.

## Patentansprüche

1. Maschine (1) zum Bearbeiten von Platten (L) aus Stein, steinähnlichem Material, agglomeriertem Material oder keramischem Material, umfassend:
- ein Paar feststehender Stützstrukturen (12), die so gestaltet sind, dass sie einen Arbeitsbereich (A) begrenzen,
- eine horizontale Oberfläche (8) zum Stützen der Platten (L) während ihrer Bearbeitung, die in dem Arbeitsbereich (A) positioniert ist,
- einen feststehenden horizontalen Träger (14), der von den feststehenden Stützstrukturen (12) getragen wird,
- einen horizontalen Träger (18), der in Bezug auf den feststehenden horizontalen Träger (14) beweglich ist und mindestens eine Spindel (20) umfasst, die verschiebbar an dem beweglichen horizontalen Träger (18) angebracht ist und so gestaltet ist, dass mindestens ein Bearbeitungswerkzeug (22) daran angebracht werden kann,
- Bewegungsmittel (32) zum Bewegen des beweglichen horizontalen Trägers (18) in Bezug auf den feststehenden horizontalen Träger (14) entlang einer vorbestimmten Vorschubrichtung (Z), die in einer Ebene liegt, die parallel zur tragenden Oberfläche (8) ist, **gekennzeichnet durch**
- Drehmittel (34) zum Drehen des beweglichen horizontalen Trägers (18) in Bezug auf den feststehenden horizontalen Träger (14) um eine Drehachse (R), die vertikal angeordnet ist, wobei die Drehachse (R) feststehend ist.

2. Maschine (1) nach Anspruch 1, **dadurch gekennzeichnet, dass** sie ein verbindendes Zwischenelement (36) umfasst, das zwischen dem feststehenden horizontalen Träger (14) und dem beweglichen horizontalen Träger (18) angeordnet ist und sowohl mit dem feststehenden horizontalen Träger (14) als auch mit dem beweglichen horizontalen Träger (18) verbunden ist.

3. Maschine (1) nach dem vorhergehenden Anspruch, **dadurch gekennzeichnet, dass** das Zwischenelement (36) mit dem feststehenden horizontalen Träger (14) um die Drehachse (R) drehbar verbunden ist.

4. Maschine (1) nach dem vorhergehenden Anspruch, **dadurch gekennzeichnet, dass** das Drehmittel (34) ein motorisiertes fünftes Rad (38) für die drehbare Verbindung zwischen dem feststehenden horizontalen Träger (14) und dem Zwischenelement (36) umfasst.

5. Maschine (1) nach einem der Ansprüche 2 bis 4, **dadurch gekennzeichnet, dass** der bewegliche horizontale Träger (18) verschiebbar an dem Zwischenelement (36) angebracht ist.

6. Maschine (1) nach dem vorhergehenden Anspruch, **dadurch gekennzeichnet, dass** das Bewegungsmittel (32) mindestens ein Paar Führungen (40) und eine Reihe von Schuhen (42) umfasst, die verschiebbar an den Führungen (40) angebracht sind, wobei die Führungen (40) an dem Zwischenelement (36) angebracht sind und die Schuhe (42) mit dem beweglichen horizontalen Träger (18) gekoppelt sind, um den beweglichen horizontalen Träger (18) verschiebbar an dem Zwischenelement (36) anzubringen.

7. Maschine (1) nach einem der vorstehenden Ansprüche, **dadurch gekennzeichnet, dass** sie eine Vielzahl von Spindeln (20) umfasst, die verschiebbar an dem beweglichen horizontalen Träger (18) angebracht sind, wobei mindestens eine der Spindeln (20) mit einer Saugnapf-Manipulatorvorrichtung (30) versehen ist.

8. Maschine (1) nach einem der Ansprüche 1 bis 6, **dadurch gekennzeichnet, dass** sie mindestens eine Saugnapf-Manipulatorvorrichtung umfasst, die an dem beweglichen horizontalen Träger (18) angebracht ist.

9. Maschine (1) nach einem der vorstehenden Ansprüche, **dadurch gekennzeichnet, dass** sie eine Vielzahl von Spindeln (20) umfasst, die verschiebbar an dem beweglichen horizontalen Träger (18) angebracht sind, wobei Mittel zum Anpassen der Neigung von mindestens einer der Spindeln (20) in Bezug auf eine vertikale Ebene vorgesehen sind.

10. Maschine (1) nach einem der vorstehenden Ansprüche, **dadurch gekennzeichnet, dass** die Bearbeitungswerkzeuge (22) eine Drehachse (Y) aufweisen, die im Wesentlichen horizontal und parallel zur Erstreckungsachse des beweglichen horizontalen Trägers (18) ist.

11. Maschine (1) nach einem der vorstehenden Ansprüche, **dadurch gekennzeichnet, dass** mindestens eines der Bearbeitungswerkzeuge (22) eine jeweilige Drehachse (Y) aufweist, die relativ zur Erstreckungsachse des beweglichen horizontalen Trägers (18) neigbar ist.

12. Maschine (1) nach einem der Ansprüche 1 bis 9, **dadurch gekennzeichnet, dass** mindestens eine Spindel (20) um eine Achse drehbar ist, die im Wesentlichen parallel zu der Drehachse (R) ist.

13. Maschine (1) nach einem der vorstehenden Ansprüche, **dadurch gekennzeichnet, dass** die Drehachse (R) senkrecht und feststehend in Bezug auf die Vorschubrichtung (Z) ist.

14. Betriebsanlage (100) zum Bearbeiten von Platten (L), umfassend:
- eine Beladestation (2) zum Beladen mit den zu bearbeitenden Platten (L),
- eine Maschine (1) zum Bearbeiten der Platten (L),
- eine Entladestation (4) zum Entladen der bearbeiteten Platten (L),
**dadurch gekennzeichnet, dass** die Maschine (1) zum Bearbeiten der Platten (L) eine Maschine des Typs nach einem der Ansprüche 1 bis 13 ist.

15. Betriebsanlage (100) nach dem vorhergehenden Anspruch, **dadurch gekennzeichnet, dass** sie eine Reihe von Bearbeitungsmaschinen (1) nach einem der Ansprüche 1 bis 13 umfasst, die in einer Reihe angeordnet sind.

## Revendications

1. Machine (1) pour usiner des dalles (L) réalisées à partir de matériau en pierre, de type pierre, aggloméré ou céramique, comprenant:
une paire de structures de support (12) fixes conçues pour délimiter une zone de travail (A);
une surface horizontale (8) pour supporter les dalles (L) pendant leur usinage, positionnée dans ladite zone de travail (A);
une poutre horizontale fixe (14) supportée par lesdites structures de support (12) fixes;
une poutre horizontale (18) mobile par rapport à la poutre horizontale fixe (14) et comprenant au moins un mandrin (20) qui est monté, de manière coulissante, sur ladite poutre horizontale mobile (18) et conçue pour avoir au moins un outil d'usinage (22) monté sur cette dernière;
des moyens de déplacement (32) pour déplacer ladite poutre horizontale mobile (18) par rapport à ladite poutre horizontale fixe (14) le long d'une direction prédéterminée de mouvement d'avancement (Z) se trouvant dans un plan qui est parallèle à la surface de support (8);
**caractérisée par**:
des moyens de rotation (34) pour faire tourner ladite poutre horizontale mobile (18) par rapport à ladite poutre horizontale fixe (14) autour d'un axe de rotation (R) qui est agencé verticalement;
dans laquelle ledit axe de rotation (R) est fixe.

2. Machine (1) selon la revendication 1, **caractérisée en ce qu'**elle comprend un élément intermédiaire d'interconnexion (36) agencé entre ladite poutre horizontale fixe (14) et ladite poutre horizontale mobile (18) et couplé à la fois à ladite poutre horizontale fixe (14) et à ladite poutre horizontale mobile (18).

3. Machine (1) selon la revendication précédente, **caractérisée en ce que** ledit élément intermédiaire (36) est couplé à ladite poutre horizontale fixe (14) en rotation autour de l'axe de rotation (R).

4. Machine (1) selon la revendication précédente, **caractérisée en ce que** lesdits moyens de rotation (34) comprennent une cinquième roue motorisée (38) pour le couplage rotatif entre ladite poutre horizontale fixe (14) et ledit élément intermédiaire (36).

5. Machine (1) selon l'une quelconque des revendications 2 à 4, **caractérisée en ce que** ladite poutre horizontale mobile (18) est montée, de manière coulissante, sur ledit élément intermédiaire (36).

6. Machine (1) selon la revendication précédente, **caractérisée en ce que** lesdits moyens de déplacement (32) comprennent au moins une paire de guides (40) et une série de patins (42) montée de manière coulissante sur lesdits guides (40), lesdits guides (40) étant montés sur ledit élément intermédiaire (36) et lesdits patins (42) étant couplés à ladite poutre horizontale mobile (18) pour le montage coulissant de ladite poutre horizontale mobile (18) sur ledit élément intermédiaire (36).

7. Machine (1) selon l'une quelconque des revendications précédentes, **caractérisée en ce qu'**elle comprend une pluralité de mandrins (20) montée de manière coulissante sur ladite poutre horizontale mobile (18), au moins l'un desdits mandrins (20) étant prévu avec un dispositif de manipulation à ventouse (30).

8. Machine (1) selon l'une quelconque des revendications 1 à 6, **caractérisée en ce qu'**elle comprend au moins un dispositif de manipulation à ventouse monté sur ladite poutre horizontale mobile (18).

9. Machine (1) selon l'une quelconque des revendications précédentes, **caractérisée en ce qu'**elle comprend une pluralité de mandrins (20) montée de manière coulissante sur ladite poutre horizontale mobile (18), là on prévoit des moyens pour régler l'inclinaison d'au moins l'un desdits mandrins (20) par rapport à un plan vertical.

10. Machine (1) selon l'une quelconque des revendications précédentes, **caractérisée en ce que** les outils d'usinage (22) ont un axe de rotation (Y) qui est sensiblement horizontal et parallèle à l'axe d'extension de ladite poutre horizontale mobile (18).

11. Machine (1) selon l'une quelconque des revendications précédentes, **caractérisée en ce qu'**au moins l'un des outils d'usinage (22) a l'axe de rotation (Y) respectif inclinable par rapport à l'axe d'extension de la poutre horizontale mobile (18).

12. Machine (1) selon l'une quelconque des revendications 1 à 9, **caractérisée en ce qu'**au moins un mandrin (20) peut tourner autour d'un axe qui est sensiblement parallèle audit axe de rotation (R).

13. Machine (1) selon l'une quelconque des revendications précédentes, **caractérisée en ce que** ledit axe de rotation (R) est perpendiculaire et fixe par rapport à ladite direction de mouvement d'avancement (Z).

14. Installation (100) pour usiner des dalles (L), comprenant:
une station de chargement (2) pour charger les dalles (L) à usiner;
une machine (1) pour usiner les dalles (L);
une station de déchargement (4) pour décharger les dalles (L) usinées;
**caractérisée en ce que** ladite machine (1) pour usiner les dalles (L) est une machine du type selon l'une quelconque des revendications 1 à 13.

15. Installation (100) selon la revendication précédente, **caractérisée en ce qu'**elle comprend une série de machines d'usinage (1) selon l'une quelconque des revendications 1 à 13, agencées en ligne.
